(19) Europäisches Patentamt / European Patent Office / Office européen des brevets

(11) **EP 3 298 747 B1**

(12) **EUROPEAN PATENT SPECIFICATION**

(45) Date of publication and mention
of the grant of the patent:
**12.09.2018 Bulletin 2018/37**

(21) Application number: **16723668.6**

(22) Date of filing: **26.04.2016**

(51) Int Cl.:
*H04N 21/2362* (2011.01)     *H04N 21/2368* (2011.01)
*H04N 21/2389* (2011.01)     *H04L 29/06* (2006.01)
*H04N 21/438* (2011.01)      *H04N 21/44* (2011.01)
*H04N 21/4402* (2011.01)     *H04N 21/6336* (2011.01)
*H04N 21/6405* (2011.01)     *H04N 21/6408* (2011.01)
*H04N 21/8547* (2011.01)     *H04N 21/643* (2011.01)

(86) International application number:
**PCT/EP2016/059258**

(87) International publication number:
**WO 2016/184646 (24.11.2016 Gazette 2016/47)**

(54) **IPTV IN MANAGED NETWORKS**

IPTV IN VERWALTETEN NETZWERKEN

TÉLÉVISION SUR PROTOCOLE INTERNET DANS DES RÉSEAUX GÉRÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2015 IT UB20150737**

(43) Date of publication of application:
**28.03.2018 Bulletin 2018/13**

(73) Proprietor: **NxT Solutions AG
8832 Wollerau (CH)**

(72) Inventors:
• **SLJIVIC, Nenad
Novi Sad 21000 (RS)**
• **CRVENKOVIC, Nikola
Novi Sad 21000 (RS)**

(74) Representative: **De Anna, Pier Luigi
DeAnna-Patent
Schubertstraße 10
80336 München (DE)**

(56) References cited:
**US-A1- 2007 143 800     US-A1- 2011 221 959
US-A1- 2015 089 073**

## Description

## Field of the invention

The present invention relates to a method, a device and a system for implementing a fast channel change in IPTV service over Managed Telecommunication Networks.

## Background of the invention

In the competitive market of IPTV (Internet Protocol TeleVision) service providers offer a high quality Television Service over IP Networks. The current available solutions can mainly be summarized into two main groups, namely: the OTT (over the top) IPTV Services, and the services offered by the Telecommunication companies that own the network.

The Telco operators need to serve reliable and scalable solutions that guarantee quality of Service under every condition.

The current solution for serving a high number of clients and guarantee scalability is multicasting: this allows an efficient delivery of multimedia streams.

The IPTV environment, with the delivery of multimedia streams to several customers, is a quite complex environment, especially when some degrees of service level agreement have to be warranted.

One important aspect, often misunderstood, is the impact of zapping in the design of the overall architecture.

In most IPTV architectures in current deployment, the fast channel change problem has been addressed by inserting fast channel change (FCC) servers in the distribution systems. A FCC server caches a few seconds of the content distributed over a multicast stream.

When the client sends a channel change request, the FCC server sends a unicast stream to the client device often starting at some point in the past (behind the current multicast packet) and sends the unicast stream at a data rate that is higher than the channel's data rate, such that the unicast stream catches up with the relevant multicast stream for that channel.

The client device starts decoding and displaying the unicast stream and then changes to the multicast stream once the unicast stream catches up.

It is evident that it is of outmost importance to reduce the multicast join time for a good level of service and consequently the switching time between one channel and the next must be as short as possible. Additionally, the delay of the IPTV Signal shown at the client side must be as short as possible to the real video being broadcasted (Source Signal). An example of such a drawback is the live event of a goal in a football match shown delayed over the IPTV platform.

Moreover, with new encoding standards like h.265 and the augmented resolutions Ultra HD [4k Resolution, 8k Resolution and 3D video services) the Bandwidth requirements will increase, thereby exacerbating the problems already present at the current SD/HD bitrates/resolutions.

The methods for fast channel change that use bursts of media information are very demanding since they require communication channels beyond the capacity required to transmit the media information in the steady state and the allocation of extra bandwidth with the drawback of over burning the communication channel, particularly when multiple users are consuming media content in the same household.

An additional impact of the fast channel change is its influence on the architecture design and the difficulties in providing a reliable service also to customers with not enough DSL access capacity.

Systems typically deployed today use 20-30% zapping burst overhead.

The solution of the present invention aims at the usage of a dynamic Burst Rate per customer computed on runtime (e.g. depending, among other parameters such as provisioned DSL Bitrate, current concurrent consumed streams by multiple STBs in the Household), without increasing the average Unicast Burst Time period on the server. Since 1999 there have been different methods and concepts for efficiently solving the problem of switching from a unicast to a corresponding multicast stream.

A seminal contribution on the subject is the article appeared on the IEEE COMMUNICATIONS LETTERS, VOL. 3, NO. 9, SEPTEMBER 1999; title: UVoD: An Unified Architecture for Video-on-Demand Services; Author Jack Y. B. Lee.

Starting from this seminal contribution and building on top of this idea other main players have developed their proprietary solutions: Microsoft US2005/0190781, Alcatel US 8161515B2, US2012/0155280 and WO2010/034505, Cisco US8769591B2, US7904581. How to handle Channel Switching was even described in the RFC 6285, mainly edited by contributions introduced by the aforementioned companies.

US2011/221959 describes a method for urging the start of viewing an interleaved audio video stream and includes repositioning audio and video access units in the interleaved audio video stream.

US2015/089073 describes a method for effectuating fast channel changes in an adaptive streaming environment.

All the existing approaches are mainly designed as running on Server side with a small processing element, also called footprint, on the Client Side. Such a small footprint runs on a wide range of chipsets with low processing power, but doesn't allow to implement more complex logic on client side. With such "one fits all" approaches, unnecessary resources are wasted (e.g. high latency to real Time Broadcasted Channels have to be accepted) and they don't take any advantage of the newest developments at the client side with the introduction of new very powerful processors and the relevant increased computational capabilities.

The solution of the present invention acts at various levels of the overall IPTV chain in a synergistic manner so to considerably improve the channel change performance.

## Brief description of the invention

There is provided, according to embodiments of the present invention a method, as further defined in claim 1, of servicing a channel change request in a digital network with at least a client and a server. The method comprising transmitting a multimedia stream using a multicast stream and a unicast stream, wherein a transcoder reorganizes the audio and video packets of the elementary stream of the multimedia stream on a time base, such that the audio and video packets related to the same frame are progressively sent adjacent to each other, on time base, in the serialized transport stream of the multicast stream. The channel change request from the client is an http unicast request and the server reply contains an http header and an http body; the http header contains parameters to setup a decoder at the client, as given in the request from the client to the server; a burst overhead in the unicast stream is set according to the parameters to setup the decoder and computed by the client; the parameters are related to the bandwidth of the client internet access already under usage comprising the case when more than one Set-Top-Box (STB) is running in the same household. The http body contains the PMT (Program Map Table) information relevant to the first independently decodable frame. A preferred embodiment of the invention is claimed in the annexed dependent claim.

## Brief description of the drawings

The invention will be better understood and illustrated by means of the following embodiments and execution examples and also with reference to the enclosed figures where:

Figure 1 shows the representation of a delay during a channel switching at the AV Packet level;
Figure 2 shows the end to end chain of a multimedia stream distribution in an IPTV delivery chain;
Figure 3 shows the serialization of IPTV packets on a PTS time based;
Figure 4 shows a burst duration;
Figure 5 shows the buffer control at the client.

## Detailed description of the preferred embodiments

The solution of the present invention acts at different levels of the IPTV distribution chain and each of the aspects onto which the current solution acts, provides synergistic and advantageous effects as regards the improvements of the overall channel change.

As a first aspect, the present solution provides an advantage in terms of reduction of latency time when switching from a multicast stream to another. The ISO/ITU-T standard codecs that comprise the MPEG-x and the H.26x families (e.g. h.264 AVC and h.265 HEVC) are encoded in group of pictures (GOP). The larger a GOP Size (in Frames) the better a Video can be compressed. Each GOP starts with an IFrame followed by various combinations of P Frames and B Frames, as allowed by the syntax. In order to be able to start decoding a stream on the client side, the Transport Stream needs to be parsed and divided in its elementary streams. So the first Packet to be read is the PMT Table (Program Map Table). Then the Video Stream decoding will start on an IFrame. This fact introduces latency times when switching from one Multicast stream to the next (channel switching) because the decoder is essentially on a hold in terms of receiving useful information until it can receive the first information related to an independently decodable information (Iframe).

The other advantage is the reduction of the latency at the decoding.

The Encoded Video Streams are delivered in MPEG Transport Stream. The TV Channels broadcast their content in MPEG Transport Stream format. For legacy reasons linked to the hardware and to the architecture, a lot of the channels have a delay between Audio and Video packets on the Transport Stream level, which needs then to be synchronized at the Decoder Level. This introduces further latency for decoding the TV Stream in the synchronized way.

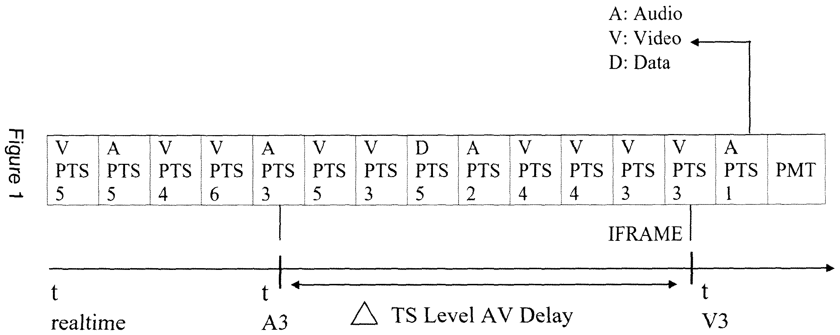

In order to overcome the aforementioned problems some existing methods buffer the TV-Multicast on the Network or Datacenter and then deliver the TV Signal as a unicast stream starting with an IFrame such that the Client can immediately start decoding. All existing solutions are working Backend centered (RFC 6285) and this introduces a high delay between the real time TV Signal (when compared with the benchmark of the satellite signal) and decoded TV Signal on the Client. Those resources are used since they are designed to serve clients with low computing power. In the current implementations available on the market, it is up to the servers the task of taking care that the client executes a proper dejitter and adequately fill the retry buffer: this requires a lot of resources also due to long Unicast Times. This situation even gets worse if the Audio/Video TS Signal is not aligned (see figure 1).

A further issue is that in a managed Telecommunication Network the customers are served with different and heterogeneous network speeds (DSL Subscription, fiber or else). A Subscriber can also have more than one Set Top Box running in the same household such that the entire bandwidth can be occupied. The existing systems have a defined Burst overhead during the unicast fast channel change period. The consequence of such centralized and not flexible approach is that customers that might have enough available Bandwidth (e.g. only one STB running at home, second STB switched off) are not enabled to use it efficiently (the higher the burst overhead the smoother the fast channel change). Additionally, current systems are often based on RFC 6285 which works on RTSP/RTCP so they need 2 unicast ports between client and server. This adds unnecessary complexity to load balance such systems, since all backend servers need to be aware on which servers the user sessions (2 Ports), have been terminated. Modern cloud deployments are working with http stateless protocol and therefore an embodiment could adopt the load balanced over anycast solution [1].

The Ultra-Fast Channel Change of the present invention is an approach that acts at various points of the IPTV chain of channel distributions and provides a solution to the aforementioned problems and inconveniences of the Fast Channel changing in the IPTV Multicast based managed Networks.

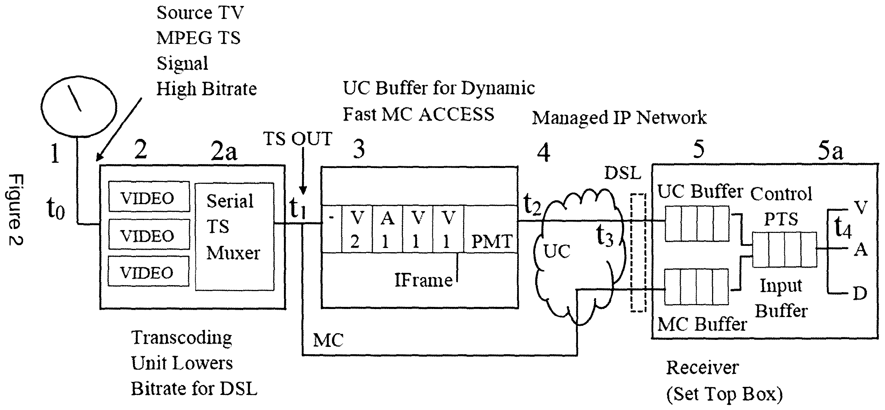

With reference to Fig. 2 it is shown the delivery of a source signal in MPEG TS Format from Satellite or direct from Studios (1).

After Transcoding the signal coming from the source, Audio and Video are serialized taking care of Presentation Time Stamp (PTS), such that Audio, Video and Data packets are serialized and in the right sequence on Transport Stream (TS) level. Having packets in the right order enables the client decoder to immediately start decoding.

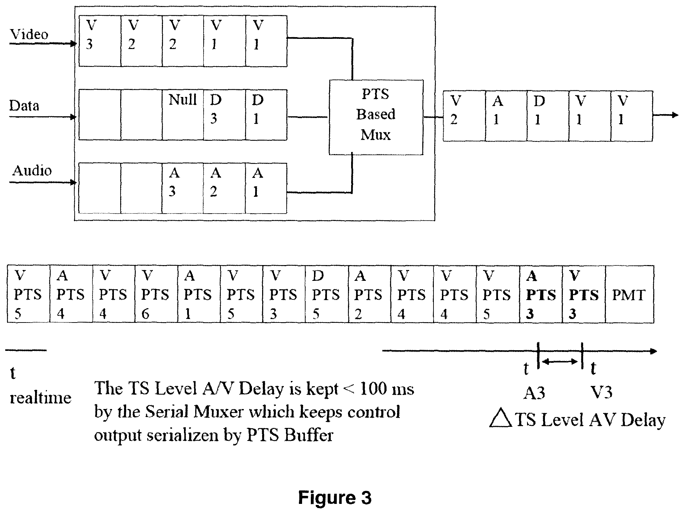

Contrary to what is done in the systems currently delivered on the market, the serialization is realized using PTS based information, as shown in Fig. 3. This is one aspect of the advantage of the invention at a first stage of the IPTV delivery chain.

Several existing solutions are using additional devices to reorder TS Packets e.g. Alcatel Rewrapper Unit which reorders TS Packets on elementary stream level. This has the drawback of requiring an additional hardware and the introduction of additional unnecessary hops in the signal chain, while our solution at the transcoder is more efficient. At another point of the IPTV delivery chain the Fast Channel Change Server allows the buffering of a minimum of one GOP in a Buffer (see figure 3): the PMT Table preceding the Iframe is the Access Pointer to that Buffer. When a client issues a channel change request (an http unicast request) to the Server, the server replies with:

**HTTP Response Header**

- Containing Stream Info (Audio and Video Codec); this and other information contained in the header enables to set Decoder parameters without parsing and decoding the TS Stream

**HTTP Response Body**

- Containig the Buffered RTP Multicast Transport Stream Starting with the PMT before Iframe (the access pointer). The PMT is only used if the HTTP Response header is not set (fallback).

The Server keeps a maximum of one GOP Size and adjusts the Burst overhead according to what the Client requested dynamically, for example with the following statement, or request, or syntax: http://FastChannelChangeServiceGroup/ChannelID/Burstoverhead=20Percent

This means that the Server is sending the Data faster to the Client in order for the client to buffer the Data and then switch back to the multicast stream.

The system of the present invention works as independent Subsystem which carries its own System Configuration. The System configuration can be read on every Server (e.g. with the statement http://FastCahnnelChangeServiceGroup/Config).

The Fast Channel Change overhead can be dynamically configured and set according to the requests and characteristics of the clients, namely each client can decide which overhead to get during the Burst period e.g. http://FastChannelChangeServiceGroup/ChannelID/Burstoverhead.

The FCC Server of the present invention is HTTP based. Since HTTP is based on tcp protocol the delivery of each IP packet is granted during the burst phase. Current RTSP/RTCP based Systems are using udp unicast to deliver packets. This means that packets can be lost during the burst rate. Before the Client can play back it must check that every IP packet has arrived, and this is done via controlling packet sequence number on input buffer. So the zapping time increases depending on the size of that buffer. Huge buffer enables to better recover from packet loss (e.g. loosing 50 IP Packets in a row), but dramatically increases the zapping time. Lost packets during burst must be reported back to the server over the additional RTCP connection. In this scenario, running two ports implies either session stickiness from client to the server or session synchronization between all backend servers. The mentioned limitations (2 Port connection) of the existing system are also causing that the load balancing, clustering and operation is more complex compared to a stateless HTTP approach.

For more details on how modern cost effective HTTP load balancing could run please refer to the document [1].

The configuration specifies the valid minimum and maximum value of such a burst overhead request: the valid values are 0<burst overhead Factor<1. A burst overhead factor must be >0 since Iframe/PMT is in the past at the time of the channel change (e.g. 1 second old) and the streamer of the server must output more Data to recover up to the live point (it is needed a burst of data for the client to be able to quickly reach the live point of the multicast stream). It makes no sense to have a burst overhead factor >1, in such a case a STB could join a channel as Unicast and Multicast concurrently, without further complications in the architecture.

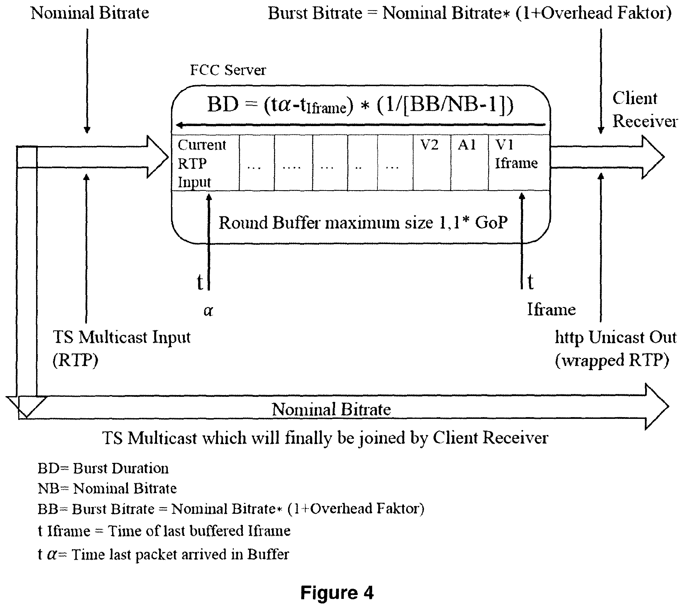

As described in Fig. 4 the burst duration is summarized with the Formula BD = $(t_{CI}-t_{IFrame})*(1/[BB/NB-1])$, where BD is the Burst Duration and it is depicted in figure 4.

BD = Burst Duration
NB = Nominal Bitrate
BB = Burst Bitrate = Nominal Bitrate * (1 + Overhead Factor)
$t_{IFrame}$= Time of last buffered IFrame
$t_{CI}$= Time last packet arrived in Buffer

The already existing systems are using the burst duration to fill up the dejitter/retries buffer on client and to correct A/V Delay on TS Stream. The client is currently considered as a mere passive receiver of burst data. Those designs are focusing on having dumb clients to save STB costs. STB HW is becoming faster and cheaper (e.g. current inexpensive solutions with 4 Core) the older designs do not take advantage of this evolution.

In the proposed invention the FCC Server provides immediate access to the Iframe for the client. The client, on its side, actively helps building up its own dejitter/retries buffer (see the paragraph of the specification of the present application named "the Client"). This results in a shorter burst duration and reduced delay to the Input Source.

The Fast Channel Change architecture has a synergistic effect with the active role played by the Fast Channel Change Client.

The Server Takes care of all Input Streams and has knowledge about the Content of each Stream. This is done by Reading PMT Table and PES Headers of each input stream. The FCC/Server keeps that Information, which is always sent to the Client, as the first Information.

The Server makes sure that the Stream always starts with PMT Table followed by an IFrame (so in the present invention the maximum delay to the Live Multicast Stream is, by definition, the maximum the GOP Size and nothing more). Existing Systems are using static configurations which have to deliver more data to the client, for example to overcome Audio/Video Delay in TS as described in figure 1 point one or filling up Client Buffers. The consequence is that they need to use more than one GOP with detrimental effects on the latency of the starting of the decoding at the client.

**The Client**

The Client has some configuration parameters which can be initialized dynamically before every Channel Change.

Depending on the available Bandwidth on the Internet access, the client computes the burst overhead to be used on every channel change (for example with the statement http://FCC-Server/Channel/Burstoverhead; e.g. the client is aware of the fact that its connection is running on a 50 MBit/s DSL line and that currently the 2nd STB in the household is in standby).

The Server starts the stream with the specified overhead and continues until it reaches the Live Point.

After the Burst Period the Server changes back to normal speed and signals to the client, that it can join the multicast stream.

The FCC HTTP Server replies to the Client request always starting with Meta info of the transport stream. This improves the initialization of the Decoder on Client Side, without having to wait for parsing the PMT and PES Headers.

Another aspect of the present invention is that unicast and multicast data are sent over a managed IP Network. This enables the Service provider to prioritize the traffic as needed, for example to send the multicast stream with a higher priority.

An additional aspect of the invention acts on the client and specifically with all the aspects related to the issuance of a Fast Channel Change request to the server.

The client reads the HTTP response (sent by the server) for initializing the decoder based on header information; the client reads the RTP packets from the Body (http). With http only one Port is opened for the communication to the server and the http sessions are stateless with a remarkable technical advantage. So load balancing can be configured over anycast without adding additional logic on server side.

The client controls a buffer before decoding: this buffer is designed to act as a time based buffer. This means that the Audio or Video Packets will (e.g.) only be pushed to the decoding process if there are 200 ms of decodable stream in the buffer, where this buffering is expressed in terms of PTS time stamp, namely it is based on PTS time stamp. This has a very important effect since this means that the buffer becomes independent from the bitrate of the Stream.

In order to achieve this, the client process will make sure to stop the Audio and/or Video stream for 40ms/s until the Buffer will reach a value of (e.g.) 200 ms of decodable media stream or any other time based value (this is a configurable value).

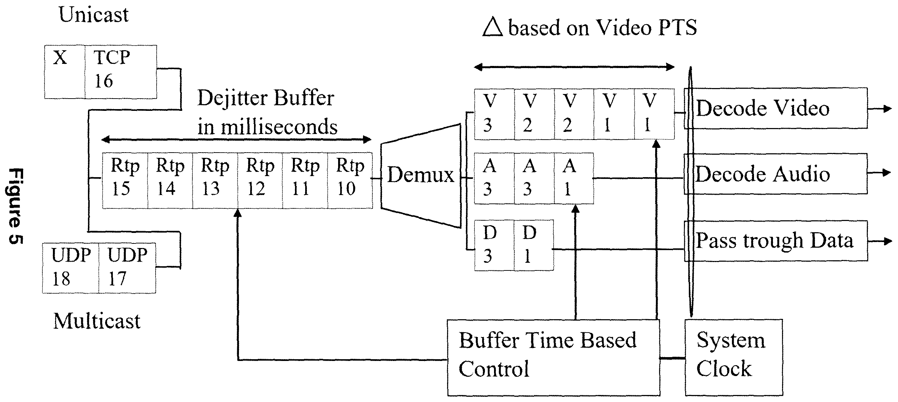

The Client process will make sure to stop the decoding of audio or video for a certain timeframe, for example for some ms and/or intervals of ms/s, if Audio or Video are not synchronized (see also figure 5 showing the handling of the buffer control at the client). In the present configuration, and differently from what happens in the state of the art, the client is then responsible to sync Audio/Video and for joining the multicast Stream. The Client starts playing immediately the Video, but with lower picture rate, if needed (e.g. by pausing the stream for 40 ms every second) until the Audio has recovered and is in synchronization with the video.

The client buffer is controlled by the PTS Timestamp of Audio and Video Signal. The Client Logic can:

- Pause Audio Stream;
- Pause Video Stream;
- Pause Audio and Video Stream;
- Play Audio and Video Stream with variable speed.

In order to build such a logic, different data, information and events are computed and used for the buffer control such as:

- Delta of oldest Video PTS to oldest Audio PTS;
- Delta of oldest Video PTS to oldest Data PTS;
- Delta of newest Video PTS to oldest Video PTS;
- Delta of newest Audio PTS to oldest Audio PTS.

On all these values, a minimum and maximum threshold is set and when they are reached, it is issued an event. In reaction to those events rules can be defined in order to control the chain of the presentation of the media content.

As an operative example, if the time difference of the oldest Video PTS to the oldest Audio PTS is too high (PTSoldestAudio-PTSoldestVideo > 40 ms), the Video stream presentation is paused for 40ms/s while Audio continues playing. So the audio can recover 40ms/s, until it reaches synchrony with video. With this method the client buffer and the synchronization between audio and video can be managed.

Another example of the time based control logic of buffer could be to adjust the buffer length dependent on the line condition of the customer. For example, on a bad WiFi or DSL connection on customers home the dejitter/retries buffer could be set higher and therefore it has the advantage of achieving a more robust decoding in case of loss (pausing 40ms/s). On the other hand, if the line is of good quality, all client buffers could be set dynamically to a minimum and decreasing in this manner the delay to the input source, thereby reducing the overall latency to the live event.

In fact, all current FCC methods that work without time based buffer control, all suffer from a higher delay to the input source. Just to give a practical example of the detrimental effect of this inconvenience, it is particularly annoying with some popular live events, such as Soccer matches that are very popular live TV events in Europe; when they are transmitted, IPTV Customers living near to Satellite customers are seeing goals 10-15 seconds after satellite customers.

Since in an IPTV use case, transmitting multicast over DSL, packet loss will statistically happen, it is important to have a client side buffer of the stream. This buffer allows to implement a retry mechanism to recover packets lost in the transmission chain, without any visual impact.

Therefore the present solution stops the whole chain (Audio, Video, Data) for 40ms/s (this actually translates into showing a video at a frame/rate of 24 frames per second, instead of 25 frames/sec, thereby introducing an unnoticeable artifact, but only for a limited amount of time).

This will be done as long as not at least a minimum time has been gained in the client buffer (time based) e.g. 500 ms.

This approach provides the tremendous advantage of allowing the client to fill the buffer without higher or longer burst rates form the Fast Channel Change Server. That is an important improvement to the current available systems on the market. This has also the technical advantage of having less delay to the live tv signal and being able to recover larger packet hole events.

The PTS based buffer control is agnostic to the Bitrate e.g. SD, HD, UHD Bitrates, this is a big advantage to the existing implementations which are working with byte based buffer controls and so use cases for SD, HD, UHD Bitrates have to be implemented separately. The command to join the Multicast Stream will be issued when the Server signalizes to change to multicast. When the Client receives the first multicast packets it drops the http connection to the Server and will join the multicast.

The Streams are synchronized over RTP sequence. Overlapping Packets will be discarded, missed packets will be requested over packet retries mechanism.

Starting from the previous examples, a lot of other rules can be implemented and combined, based on this principle. The previous example is based on PTS, but also Decoding Time Stamp (DTS) can be used to implement such a control.

The client controls also an input dejitter/retrie buffer dynamically.

The time based buffers after Demux (see figure 5) are buffering data for a predefined amount of time e.g. 500 ms. When a packet loss happens the dejitter/reties buffer has this amount of time to recover the packet and burst the data back to the chain.

The recovery of a lost packet is done via http call e.g. http://FCC-Server/Channel/LostRTPSeq(List).

The advantage of the new present solution is that the maximum whole (lost RTP packets) which can be recovered is dynamically configurable (e.g.by pausing several times for 40ms/s to build up buffer). So the longer the time controlled buffer is set, the larger a whole can be recovered, without introducing latency on channel zapping time. This is important especially for use cases when the IPTV STB is connected via WIFI in home network.

Existing Solutions have only the possibility to fill up buffer with FCC burst.

Reference

[1] Anycast as load balancing feature, Weiden et al. https://www.usenix.org/legacy/event/lisa10/tech/full_papers/Weiden.pdf

## Claims

1. A method of servicing a channel change request in a digital network with at least a client and a server, said method comprising transmitting a multimedia stream using a multicast stream and a unicast stream; wherein

   a transcoder reorganizes audio and video packets of an elementary stream of said multimedia stream on a time base, such that the audio and video packets related to the same frame are progressively sent adjacent to each other, on time base, in a serialized transport stream of the multicast stream; **characterized in that**:

   • said channel change request from the client is an http unicast request and a server reply contains an http header and an http body;
   • the http header contains parameters to setup a decoder at the client, as given in the request from the client to the server;
   • a burst overhead in the unicast stream is set according to said parameters to setup the decoder and computed by the client;
   • said parameters are related to the bandwidth of the client internet access already under usage comprising the case when more than one Set-Top-Box, STB, is running in the same household;

   and wherein the http body contains a Program Map Table (PMT) information relevant to a first independently decodable frame.

2. The method of claim 1 wherein the burst duration BD is defined as follows

   $$BD = (\ t_{CI} - t_{IFrame}\ ) * (1/\ [BB/NB\text{-}1]),$$

   wherein

   BD = Burst Duration
   NB = Nominal Bitrate
   BB = Burst Bitrate = Nominal Bitrate * (1 + Overhead Factor)
   $t_{IFrame}$ = Time of last buffered IFrame
   $t_{CI}$ = Time last packet arrived in Buffer

## Patentansprüche

1. Verfahren zum Warten einer Kanaländerungsanfrage in einem digitalen Netzwerk mit zumindest einem Klienten und einem Server, wobei das Verfahren umfasst: Übertragen eines Multimediastroms unter Verwendung eines Multicaststroms und eines Unicaststroms, wobei

   ein Codeumsetzer Audio- und Videopakete in einem elementaren Strom des Multimediastroms auf Grundlage einer Zeitbasis derart reorganisiert, dass die dasselbe Vollbild betreffenden Audio- und Videopakete progressive benachbart zueinander auf Grundlage der Zeitbasis in einem serialisierten Transportstrom des Multicaststroms gesendet werden, **dadurch gekennzeichnet, dass**:

   • die Kanaländerungsanfrage vom Klienten eine HTTP-Anforderung ist und eine Serverantwort einen http- Header und einen http- http-Body enthält,
   • der http-Header Parameter zum Konfigurieren eines Decoders beim Klienten nach Vorgabe der Anfrage des Klienten beim Server enthält,
   • ein Burst-Overhead in dem Unicaststrom in Übereinstimmung mit den Parametern zum Konfigurieren des Decoders sowie berechnet durch den Klienten eingestellt wird,
   • die Parameter bezogen sind auf die Bandbreite des bereits genutzten Internetzugangs des Klienten, umfassend des Falls, dass mehr als eine Set-Top-Box, STB, im selben Haushalt läuft,

   und wobei der http-Body eine PMT (Programm-Map-Table) Information enthält, die für das erste unabhängig dekodierbare Vollbild relevant ist.

2. Verfahren nach Anspruch 1, wobei die Burstdauer BD wie folgt definiert ist:

   $$BD = (t_{CI} - t_{IFrame}) * (1/\ [BB/NB\text{-}1]),$$

   wobei

   BD = Burst-Dauer
   NB = nominelle Bitrate
   BB = Burst-Bitrate = Nominal Bitrate * (1 + Overhead-Faktor)
   $t_{IFrame}$ = Zeitpunkt des zuletzt gepufferten IFrame
   $t_{CI}$ = Zeitpunkt, zu dem das letzte Paket im Puffer angelangt ist.

## Revendications

1. Procédé de desserte d'une demande de changement de canal dans un réseau numérique avec au moins un client et un serveur, ledit procédé comprenant la transmission d'un flux multimédia en utilisant un flux de multidiffusion et un flux de monodiffusion ; dans lequel

   un transcodeur réorganise des paquets audio et vidéo d'un flux élémentaire dudit flux multimédia sur une base temporelle, de telle sorte que les paquets audio et vidéo se rapportant à la même trame sont progressivement envoyés les uns à côté des autres, sur une base temporelle, dans un flux de transport sérialisé du flux de multidiffusion ; **caractérisé en ce que** :

    • ladite demande de changement de canal venant du client est une demande de monodiffusion http et une réponse du serveur contient un en-tête http et un corps http ;
    • l'en-tête http contient des paramètres pour configurer un décodeur au niveau du client, de la façon donnée dans la demande du client au serveur ;
    • un surdébit de rafale de paquets dans le flux de monodiffusion est défini selon lesdits paramètres pour configurer le décodeur et calculé par le client ;
    • lesdits paramètres se rapportent à la bande passante de l'accès à Internet du client déjà en usage comprenant le cas où plus d'un boîtier décodeur, STB, est en fonctionnement dans le même ménage ;

et dans lequel le corps http contient des informations de table de carte de programme (PMT) en rapport avec une première trame indépendamment décodable.

2. Procédé selon la revendication 1, dans lequel la durée de rafale BD est définie comme suit

$$BD = (t_{CI} - t_{IFrame}) * (1/[BB/NB-1]),$$

dans lequel

    BD = Durée de rafale
    NB = Débit binaire nominal
    BB = Débit binaire de rafale = Débit binaire nominal * (1 + Facteur de surdébit)
    $t_{IFrame}$ = Moment de la dernière IFrame mise en tampon
    $t_{CI}$ = Moment où le dernier paquet est arrivé dans le tampon

Figure 1

Figure 2

EP 3 298 747 B1

| Video → | V 3 | V 2 | V 2 | V 1 | V 1 | | | | |
|---|---|---|---|---|---|---|---|---|---|
| Data → | | | Null | D 3 | D 1 | | PTS Based Mux | | |
| Audio → | | | A 3 | A 2 | A 1 | | | | |

Output: V 2 | A 1 | D 1 | V 1 | V 1 →

| V PTS 5 | A PTS 4 | V PTS 4 | V PTS 6 | A PTS 1 | V PTS 5 | V PTS 3 | D PTS 5 | A PTS 2 | V PTS 4 | V PTS 4 | V PTS 5 | **A PTS 3** | **V PTS 3** | PMT |
|---|---|---|---|---|---|---|---|---|---|---|---|---|---|---|

t
realtime

The TS Level A/V Delay is kept < 100 ms by the Serial Muxer which keeps control output serializen by PTS Buffer

t A3 ←→ t V3

△ TS Level AV Delay

**Figure 3**

Nominal Bitrate

Burst Bitrate = Nominal Bitrate* (1+Overhead Faktor)

FCC Server

$$BD = (t\alpha - t_{Iframe}) * (1/[BB/NB-1])$$

| Current RTP Input | ... | .... | ... | .. | ... | V2 | A1 | V1 Iframe |

Round Buffer maximum size 1,1* GoP

Client Receiver

t
$\alpha$

t
Iframe

TS Multicast Input
(RTP)

http Unicast Out
(wrapped RTP)

Nominal Bitrate

TS Multicast which will finally be joined by Client Receiver

BD= Burst Duration
NB= Nominal Bitrate
BB= Burst Bitrate = Nominal Bitrate* (1+Overhead Faktor)
t Iframe = Time of last buffered Iframe
t $\alpha$= Time last packet arrived in Buffer

**Figure 4**

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050190781 A, Alcatel
- US 8161515 B2
- US 20120155280 A
- WO 2010034505 A, Cisco
- US 8769591 B2
- US 7904581 B
- US 2011221959 A
- US 2015089073 A

### Non-patent literature cited in the description

- **JACK Y. B. LEE.** UVoD: An Unified Architecture for Video-on-Demand Services. *IEEE COMMUNICATIONS LETTERS,* September 1999, vol. 3 (9